# EUROPEAN PATENT SPECIFICATION

(11) **EP 3 467 018 B1**
(45) Date of publication and mention of the grant of the patent: **03.11.2021**
(21) Application number: 17806812.8
(22) Date of filing: 01.06.2017
(51) Int. Cl.: C08L 7/00, C08L 15/00, C08C 19/22, C08C 19/25, B60C 1/00

(54) **RUBBER COMPOSITION AND TIRE**
KAUTSCHUKZUSAMMENSETZUNG UND REIFEN
COMPOSITION DE CAOUTCHOUC, ET PNEUMATIQUE

(30) Priority: 01.06.2016 JP 2016110514
(43) Date of publication of application: 10.04.2019
(73) Proprietor: Bridgestone Corporation, Tokyo 104-8340 (JP)
(72) Inventor: TAKANO Kosuke, Tokyo 104-8340 (JP)
(74) Representative: Lang, Johannes
(86) International application number: PCT/JP2017/020518
(87) International publication number: WO 2017/209262

(56) References cited:
- WO-A1-2013/077018
- JP-A- 2009 035 643
- JP-A- 2013 177 632
- JP-A- 2016 003 318
- JP-A- 2016 027 176
- US-A1- 2013 331 498
- DATABASE WPI Week 200053 Thomson Scientific, London, GB; AN 2000-567865 XP002790816, & JP 2000 198517 A (YOKOHAMA RUBBER CO LTD) 18 July 2000 (2000-07-18)
- DATABASE WPI Week 200726 Thomson Scientific, London, GB; AN 2007-262084 XP002790817, & JP 2007 039499 A (YOKOHAMA RUBBER CO LTD) 15 February 2007 (2007-02-15)
- DATABASE WPI Week 200563 Thomson Scientific, London, GB; AN 2005-608989 XP002790818, & JP 2005 220187 A (BRIDGESTONE CORP) 18 August 2005 (2005-08-18)

## Description

### TECHNICAL FIELD

The present disclosure relates to a rubber composition and a tire.

### BACKGROUND

In relation to global carbon dioxide emission regulation, which is reflecting growing concern about environmental issues in recent years, there is an increasing demand for higher fuel efficiency in vehicles. In order to meet such demand, lower rolling resistance is required for tire performance. Here, in developing a tire tread rubber composition that contributes to tire rolling resistance, the loss tangent (tanδ) at around 60°C may generally be used effectively as an index, in consideration of the tire temperature which increases to around 60°C during normal driving; specifically, a rubber composition with low tanδ at around 60°C may be used as a tread rubber, to thereby suppress tire heat generation so as to reduce rolling resistance, which leads to improved tire fuel efficiency (PTL 1).

Further, in view of promoting vehicle driving safety, importance is placed on ensuring grip performance on a wet road surface (hereinafter, simply referred as "wet performance"), which requires not only to improve tire fuel efficiency but also to improve wet performance. In this regard, PTL 2 discloses a rubber composition for a tread of a tire, in which tanδ at 0°C is set to 0.95 or higher, so as to improve wet performance.

JP 2000 198517 A discloses a rubber composition comprising natural rubber and styrene-butadiene rubber in a mixing ratio of 50/50 to 80/20 related to 100 parts by weight of rubber, 45 to 65 parts by weight of a specific ultra-fine grain carbon black, 5 to 20 parts by weight of silica, and 2 to 7 parts by weight of resin. JP 2013 177632 A refers to a rubber composition for tires, which comprises isoprene-based rubber, sulfur and a coumarone-indene resin having a softening point of -20 to 45°C, wherein the coumarone-indene resin is contained in an amount of 0.5 to 20 parts by mass based on 100 parts by mass of the rubber component. WO 2013/077018 A1 refers to a rubber composition comprising: a conjugated diene-based polymer obtained by reacting a compound containing nitrogen atoms and/or silicon atoms with the active terminal of a co-polymer obtained by polymerizing a monomer component containing a conjugated diene compound and a silicon-containing vinyl compound using a specific polymerization initiator, and a silica having a specified nitrogen adsorption surface area. JP 2016 027176 A discloses a rubber composition comprising at least 70% by mass of natural rubber, and, with respect to 100 parts by mass of the rubber component, 5 to 50 parts by mass of a thermoplastic resin selected from terpene-aromatic compound resins, rosin resins, dicyclopentadiene resins, and alkylphenol resins, dicyclopentadiene resin, and alkylphenol resin, and 20 to 120 parts by mass of a filler including silica.

### CITATION LIST

### Patent Literature

PTL 1: JP 2012-92179 A
PTL 2: JP 2014-9324 A

### SUMMARY

### (Technical Problem)

However, as described above, it has been known that the tire low rolling resistance and the tire wet grip performance are either inversely proportional or proportional to tanδ, which are thus difficult to achieve both at high levels.

It could therefore be helpful to provide a rubber composition capable of solving the aforementioned conventional problems in the art, to thereby improve tire fuel efficiency and wet performance.

It could also be helpful to provide a tire excellent in fuel efficiency and wet performance.

### (Solution to Problem)

We have made an intensive study to find that a rubber composition and a tire applied with the present disclosure are provided with excellent low rolling resistance and excellent wet grip performance. Thus, configurations disclosed herein are as follows:

The disclosed rubber composition of the invention includes: a diene-based polymer (A); a filler (B); and at least one kind of resin (C) selected from the group consisting of a C₅ resin, a C₉ resin, a C₅-C₉ resin, and a dicyclopentadiene resin, in which:
the diene-based polymer (A) contains 40 mass% or more of natural rubber,
the diene-based polymer (A) further contains a modified polymer; the filler (B) is compounded by 40 to 120 parts by mass with respect to 100 parts by mass of the diene-based polymer (A);
the filler (B) contains 50 to 100 mass% of silica having an average primary particle size of 20 nm or more and a nitrogen adsorption specific surface area of 150 m²/g or less; and
the resin (C) is compounded by 5 to 50 parts by mass with respect to 100 parts by mass of the diene-based polymer (A).

The disclosed rubber composition may be applied to a tire tread rubber, to thereby improve tire fuel efficiency and wet performance.

Here in this disclosure, the average primary particle size of silica is a value obtained by a laser diffraction/scattering method, in which silica to be measured is irradiated with a laser light so as to obtain a light intensity distribution pattern of spatially diffracted/scattered light. This light intensity pattern has correspondence with the primary particle size, and thus the average primary particle size can be measured. Here, Span Mastersizer 2000 (Malvern instruments Ltd.) or the like may be used as a measuring apparatus,

Further, the nitrogen adsorption specific surface area of silica is a value obtained by a BET method in accordance with JIS K 6430:2008.

In a preferred example of the disclosed rubber component, the diene-based polymer (A) contains 40 mass% or more of natural rubber. In this case, a tire applied with the rubber composition is further improved in fuel efficiency at low temperatures.

Here, the diene-based polymer (A) further contains a modified polymer. In this case, the rubber composition may be applied to a tire tread rubber, to thereby further improve tire fuel efficiency and wet performance.

In the disclosed rubber composition, tanδ at 0°C is preferably 0.5 or less, and the difference between tanδ at 30°C and tanδ at 60°C is preferably 0.07 or less. Further, the disclosed rubber composition preferably has a storage modulus of 20 MPa or less on dynamic strain of 1% at 0°C. In this case, the rubber composition may be applied to a tread rubber of a tire, to thereby further improve wet performance of the tire, and also improve fuel efficiency of the tire at low temperatures, which even allows for improving fuel efficiency of the tire across a wide temperature range.

In the disclosed rubber composition, the difference between tanδ at 0°C and tanδ at 30°C is preferably 0.30 or less. In this case, the rubber composition may be applied to a tread rubber of a tire, to thereby further improve wet performance of the tire while suppressing temperature dependence of fuel efficiency.

In the disclosed rubber composition, the difference between tanδ at 0°C and tanδ at 60°C is preferably 0.35 or less. In this case, the rubber composition may be applied to a tread rubber of a tire, to thereby suppress temperature dependence of fuel efficiency.

Further, the disclosed tire is characterized in that the aforementioned rubber composition of the invention is used as a tread rubber. The disclosed tire uses the aforementioned rubber composition in a tread rubber and thus is excellent in fuel efficiency and wet performance.

### (Advantageous Effect)

The rubber composition disclosed herein is capable of improving tire fuel efficiency and wet performance. Further, the tire disclosed herein is excellent in fuel efficiency and wet performance.

### DETAILED DESCRIPTION

The disclosed rubber composition and tire are illustrated in detail by way of example, based on an embodiment thereof.

### <Rubber Composition>

The disclosed rubber composition of the invention includes: a diene-based polymer (A); a filler (B); and at least one kind of resin (C) selected from the group consisting of a C₅ resin, a C₉ resin, a C₅-C₉ resin, and a dicyclopentadiene resin, in which: the filler (B) is compounded by 40 to 120 parts by mass of with respect to 100 parts by mass of the diene-based polymer (A); the filler (B) contains 50 to 100 mass% of silica having an average primary particle size of 20 nm or more and a nitrogen adsorption specific surface area of 150 m²/g or less; and the resin (C) is compounded by 5 to 50 parts by mass of with respect to 100 parts by mass of the diene-based polymer (A).

In the disclosed rubber composition, the filler (B) contains 50 mass% or more of silica having an average primary particle size of 20 nm or more and a nitrogen adsorption specific surface area of 150 m²/g or less (hereinafter, also referred to as "large particle size silica"), to thereby reduce tanδ at 60°C, which improves fuel efficiency of a tire applied with the disclosed rubber composition.

Further, in the disclosed rubber composition, the filler (B) contains 50 mass% or more of silica having an average primary particle size of 20 nm or more and a nitrogen adsorption specific surface area of 150 m²/g or less, to thereby also reduce elastic modulus in a high-strain region of the rubber composition.

Further, in the disclosed rubber composition, a resin (C) selected from the group consisting of a C₅ resin, a C₉ resin, a C₅-C₉ resin, and a dicyclopentadiene resin is compounded by a specified amount, to thereby further reduce elastic modulus in a high-distortion region while suppressing reduction in elastic modulus in a low-distortion region. Thus, the disclosed rubber composition may be applied to a tire tread rubber, so as to ensure rigidity of the tread rubber in a portion that suffers minor distortion during running as being distant from the contact patch with a road surface, while increasing the deformed volume of the tread rubber that suffers significant distortion during running as being in the vicinity of the contact patch with a road surface.

Then, the friction coefficient (µ) on a wet road surface is proportional to the product of the rigidity of the tread rubber as a whole, the deformation volume of the tread rubber, and tanδ (loss tangent); thus, a tire having the disclosed rubber composition applied to the tread rubber is capable of increasing the deformation volume of the tread rubber while ensuring the rigidity of the tread rubber as a whole even if tanδ is reduced due to the application of the silica and the resin (C). Accordingly, the tire is capable of sufficiently increasing the friction coefficient (µ) on a wet road surface, and such large friction coefficient (µ) on a wet road surface can improve wet performance. Therefore, the tire having the disclosed rubber composition applied to the tread rubber thereof is improved in fuel efficiency due to tanδ being low, and is also improved in wet performance due to the friction coefficient (µ) being high on a wet road surface.

Examples of the diene-based polymer (A) may include, in addition to natural rubber (NR), synthetic diene-based rubbers such as synthetic isoprene rubber (IR); polybutadiene rubber (BR); styrene-butadiene copolymer rubber (SBR); and styrene-isoprene copolymer rubber (SIR), and may also include other synthetic rubbers. These diene-based polymers (A) may each be used alone or as a compound of two or more. Here, the disclosed rubber composition may also be compounded with a rubber component other than the diene-based polymer (A).

The diene-based polymer (A) contains 40 mass% or more and preferably 50 mass% or more of natural rubber (NR), and more preferably contains 60 mass% or more of natural rubber. The diene-based polymer (A) containing 50 mass% or more of natural rubber allows for reducing tanδ, in particular, tanδ at 0°C, which further improves fuel efficiency at low temperatures of a tire applied with the rubber composition.

Further, the diene-based polymer (A) further includes a modified polymer. The content of the modified polymer in the diene-based polymer (A) is preferably 10 to 60 mass%, more preferably 10 to 50 mass%, and further preferably 20 to 40 mass%. The modified polymer thus contained in the diene-based polymer (A) improves dispersiveness of the filler (B) in the rubber composition, and the rubber composition may be applied to a tire tread rubber so as to further improve tire fuel efficiency and wet performance.

Modified functional groups in the modified polymer may include, for example, nitrogen-containing functional groups, silicon-containing functional groups, and oxygen-containing functional groups.

Polymers to be used as the modified polymer may include: a polymer obtained by using, as a monomer, a conjugated diene compound or a conjugated diene compound and an aromatic vinyl compound, and by modifying, by a modifier, a molecular terminal and/or a main chain of a polymer or a copolymer of the conjugated diene compound or of a copolymer of the conjugated diene compound and the aromatic vinyl compound; or, alternatively, a polymer obtained by using, as a monomer, a conjugated diene compound or a conjugated diene compound and an aromatic vinyl compound, and by polymerizing or copolymerizing these monomers, using a polymerization initiator having a modified functional group.

As to the monomers to be used for the synthesis of the modified polymer, examples of the conjugated diene compound may include: 1,3-butadiene; isoprene; 1,3-pentadiene; 2,3-dimethylbutadiene; 2-phenyl-1,3-butadiene; and 1,3-hexadiene, and examples of the aromatic vinyl compound may include: styrene; α-methylstyrene; 1-vinylnaphthalene; 3-vinyltoluene; ethylvinylbenzene; divinylbenzene; 4-cyclohexylstyrene; and 2,4,6-trimethylstyrene.

A preferred example of the modifier is a hydrocarbyloxy silane compound.

Preferred as the hydrocarbyloxy silane compound is a compound represented by the following general formula (I):

R¹ₐ-Si-(OR²)₄₋ₐ ··· (I).

In the general formula (I), R¹ and R² each independently represent a monovalent aliphatic hydrocarbon group with 1 to 20 carbon atoms and a monovalent aromatic hydrocarbon group with 6 to 18 carbon atoms, where "a" is an integer of 0 to 2, OR² may be the same or different from each other when more than one OR² are included. Further, no active proton is included within the molecule.

Also preferred as the hydrocarbyloxy silane compound may be a compound represented by the following general formula (II):

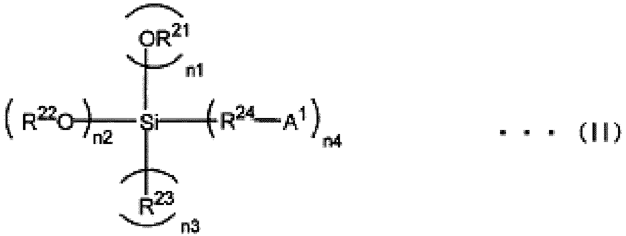

In the general formula (II), n1+n2+n3+n4 is 4 (where n2 is an integer of 1 to 4, and n1, n3, and n4 each are an integer of 0 to 3), A¹ is at least one functional group selected from: a saturated cyclic tertiary amine compound residue; unsaturated cyclic tertiary amine compound residue; ketimine residue; a nitrile group; an isocyanato group; a thioisocyanato group; an epoxy group; a thioepoxy group; an isocyanuric acid tri-hydrocarbylester group; a carbonated dihydrocarbyl ester group; a pyridine group; a ketone group; a thioketone group; an aldehyde group; a thioaldehyde group; an amide group; a carboxylic acid ester group; a thiocarboxylic acid ester group; metal salt of carboxylic acid ester; metal salt of thiocarboxylic acid ester; a carboxylic anhydride residue; a carboxylic halogen compound residue; and a primary or secondary amino group having a hydrolyzable group or a mercapto group having a hydrolyzable group, in which A¹ may be the same or different from each other when n4 is 2 or more, A¹ may be a divalent group which binds to Si to form a cyclic structure, R²¹ is a monovalent aliphatic or alicyclic hydrocarbon group with 1 to 20 carbon atoms or a monovalent aromatic hydrocarbon group with 6 to 18 carbon atoms, in which R²¹ may be the same or different from each other when n1 is 2 or more, R²³ is a monovalent aliphatic or alicyclic hydrocarbon group with 1 to 20 carbon atoms, a monovalent aromatic hydrocarbon group with 6 to 18 carbon atoms, or a halogen atom, in which R²³ may be the same or different when n3 is 2 or more, R²² is a monovalent aliphatic or alicyclic hydrocarbon group with 1 to 20 carbon atoms or a monovalent aromatic hydrocarbon group with 6 to 18 carbon atoms, either of which may contain a nitrogen atom and/or a silicon atom, in which R²² may be the same or different from each other or may form a ring together when n2 is 2 or more, R²⁴ is a divalent aliphatic or alicyclic hydrocarbon group with 1 to 20 carbon atoms or a divalent aromatic hydrocarbon group with 6 to 18 carbon atoms, in which R²⁴ may be the same or different when n4 is 2 or more. Preferred examples of the hydrolyzable group in the primary or secondary amino group having a hydrolyzable group or the mercapto group having a hydrolyzable group are a trimethylsilyl group and a tert-butyldimethylsilyl group, with a trimethylsilyl group being particularly preferred.

Preferred as the compound represented by the aforementioned general formula (II) is a compound represented by the following general formula (III):

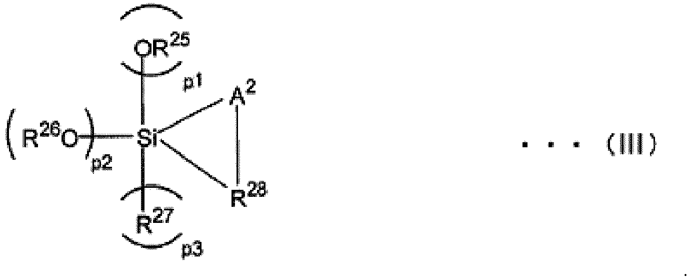

In the general formula (III), p1+p2+p3 is 2 (where P2 is an integer of 1 to 2, p1 and p3 each are an integer of 0 to 1), A² is NRa (Ra is a monovalent hydrocarbon group, a hydrolyzable group, or a nitrogen-containing organic group) or sulfur, R²⁵ is a monovalent aliphatic or alicyclic hydrocarbon group with 1 to 20 carbon atoms or a monovalent aromatic hydrocarbon group with 6 to 18 carbon atoms, R²⁷ is a monovalent aliphatic or alicyclic hydrocarbon group with 1 to 20 carbon atoms, a monovalent aromatic hydrocarbon group with 6 to 18, or a halogen atom, R²⁶ is a monovalent aliphatic or alicyclic hydrocarbon group with 1 to 20 carbon atoms, a monovalent aromatic hydrocarbon group with 6 to 18, or a nitrogen-containing organic group, either of which may contain a nitrogen atom and/or a silicon atom, in which R²⁶ may be the same or different from each other or may form a ring together when p2 is 2, R²⁸ is a divalent aliphatic or alicyclic hydrocarbon group with 1 to 20 carbon atoms or a divalent aromatic hydrocarbon group with 6 to 18. Preferred examples of the hydrolyzable group are a trimethylsilyl group and a tert-butyldimethylsilyl group, with a trimethylsilyl group being particularly preferred.

Also preferred as the compound represented by the aforementioned general formula (II) is a compound represented by the following general formula (IV):

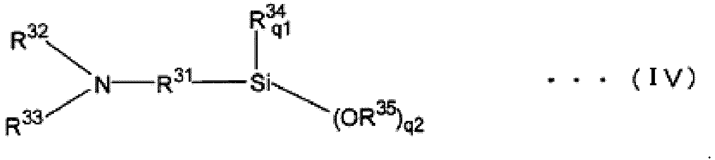

In the general formula (IV), q1+q2 is 3 (where q1 is an integer of 0 to 2, q2 is an integer of 1 to 3), R³¹ is a divalent aliphatic or alicyclic hydrocarbon group with 1 to 20 carbon atoms or a divalent aromatic hydrocarbon group with 6 to 18 carbon atoms, R³² and R³³ each independently represent a hydrolyzable group, a monovalent aliphatic or alicyclic hydrocarbon group with 1 to 20 carbon atoms or a monovalent aromatic hydrocarbon group with 6 to 18 carbon atoms, R³⁴ is a monovalent aliphatic or alicyclic hydrocarbon group with 1 to 20 carbon atoms or a monovalent aromatic hydrocarbon group with 6 to 18 carbon atoms, in which R³⁴ may be the same or different from each other when q1 is 2, R³⁵ is a monovalent aliphatic or alicyclic hydrocarbon group with 1 to 20 carbon atoms or a monovalent aromatic hydrocarbon group with 6 to 18 carbon atoms, in which R³⁵ may be the same or different from each other when q2 is 2 or more. Preferred examples of the hydrolyzable group are a trimethylsilyl group and a tert-butyldimethylsilyl group, with a trimethylsilyl group being particularly preferred.

Also preferred as the compound represented by the aforementioned general formula (II) is a compound represented by the following general formula (V):

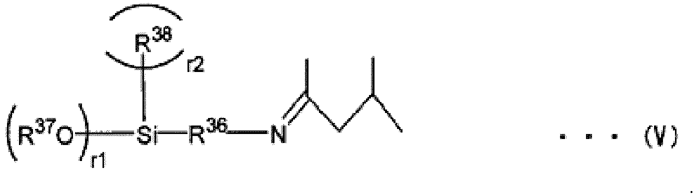

In the general formula (V), r1+r2 is 3 (where r1 is an integer of 1 to 3, r2 is an integer of 0 to 2), R³⁶ is a divalent aliphatic or alicyclic hydrocarbon group with 1 to 20 carbon atoms or a divalent aromatic hydrocarbon group with 6 to 18 carbon atoms, R³⁷ is a dimethylaminomethyl group, dimethylaminoethyl group, a diethylaminomethyl group, a diethylaminoethyl group, a methylsilyl(methyl)aminomethyl group, a methylsilyl(methyl)aminoethyl group, methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group with 1 to 20 carbon atoms or a monovalent aromatic hydrocarbon group with 6 to 18 carbon atoms, in which R³⁷ may be the same or different from each other when r1 is 2 or more, R³⁸ is a hydrocarbyloxy group with 1 to 20 carbon atoms, a monovalent aliphatic or alicyclic hydrocarbon group with 1 to 20 carbon atoms, or a monovalent aromatic hydrocarbon group with 6 to 18 carbon atoms, in which R³⁸ may be the same or different from each other when r2 is 2.

Also preferred as the compound represented by the aforementioned general formula (II) is a compound represented by the following general formula (VI):

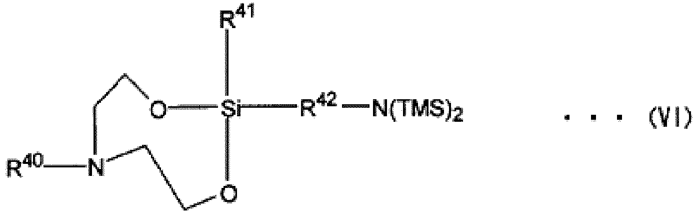

In the general formula (VI), R⁴⁰ is a trimethylsilyl group, a monovalent aliphatic or alicyclic hydrocarbon group with 1 to 20 carbon atoms or a monovalent aromatic hydrocarbon group with 6 to 18 carbon atoms, R⁴¹ is a hydrocarbyloxy group with 1 to 20 carbon atoms, a monovalent aliphatic or alicyclic hydrocarbon group with 1 to 20 carbon atoms, or a monovalent aromatic hydrocarbon group with 6 to 18 carbon atoms, and R⁴² is a divalent aliphatic or alicyclic hydrocarbon group with 1 to 20 carbon atoms or a divalent aromatic hydrocarbon group with 6 to 18 carbon atoms. Here, TMS refers to a trimethylsilyl group (hereinafter the same).

Also preferred as the compound represented by the aforementioned general formula (II) is a compound represented by the following general formula (VII):

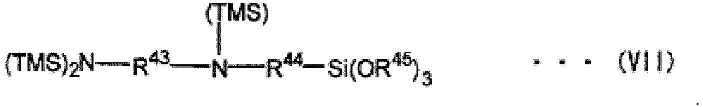

In general formula (VII), R⁴³ and R⁴⁴ are each independently represent a divalent aliphatic or alicyclic hydrocarbon group with 1 to 20 carbon atoms or a divalent aromatic hydrocarbon group with 6 to 18 carbon atoms, R⁴⁵ is a monovalent aliphatic or alicyclic hydrocarbon group with 1 to 20 carbon atoms or a monovalent aromatic hydrocarbon group with 6 to 18 carbon atoms, where R⁴⁵ may be the same or different from one another.

Also preferred as the compound represented by the aforementioned general formula (II) is a compound represented by the following general formula (VIII):

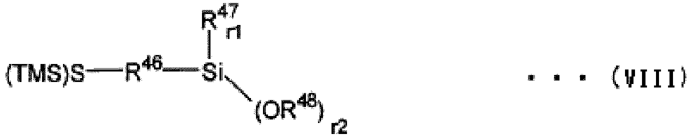

In the general formula (VIII), r1+r2 is 3 (where r1 is an integer of 0 to 2, r2 is an integer of 1 to 3), R⁴⁶ is a divalent aliphatic or alicyclic hydrocarbon group with 1 to 20 carbon atoms or a divalent aromatic hydrocarbon group with 6 to 18 carbon atoms, R⁴⁷ and R⁴⁸ each independently represent a monovalent aliphatic or alicyclic hydrocarbon group with 1 to 20 carbon atoms or a monovalent aromatic hydrocarbon group with 6 to 18 carbon atoms. The plurality of R⁴⁷ or R⁴⁸ may be the same or different from one another.

Also preferred as the compound represented by the aforementioned general formula (II) is a compound represented by the following general formula (IX):

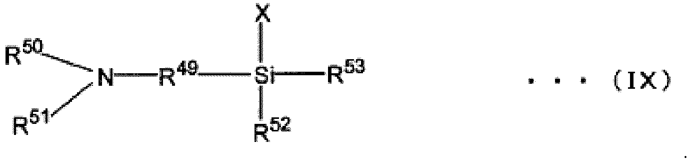

In the general formula (IX), X is a halogen atom, R⁴⁹ is a divalent aliphatic or alicyclic hydrocarbon group with 1 to 20 carbon atoms or a divalent aromatic hydrocarbon group with 6 to 18 carbon atoms, R⁵⁰ and R⁵¹ each independently represent a hydrolyzable group, a monovalent aliphatic or alicyclic hydrocarbon group with 1 to 20 carbon atoms, or a monovalent aromatic hydrocarbon group with 6 to 18 carbon atoms, or alternatively, R⁵⁰ binds to R⁵¹ to form a divalent organic group, and R⁵² and R⁵³ each independently represent a halogen atom, a hydrocarbyloxy group, a monovalent aliphatic or alicyclic hydrocarbon group with 1 to 20 carbon atoms, or a monovalent aromatic hydrocarbon group with 6 to 18 carbon atoms. R⁵⁰ and R⁵¹ are each preferably a hydrolyzable group, and preferred examples of the hydrolyzable group are a trimethylsilyl group and a tert-butyldimethylsilyl group, with a trimethylsilyl group being particularly preferred.

Also preferred as the hydrocarbyloxysilane compound represented by the aforementioned general formula (II) are compounds represented by the following general formulae (X) to (XIII):

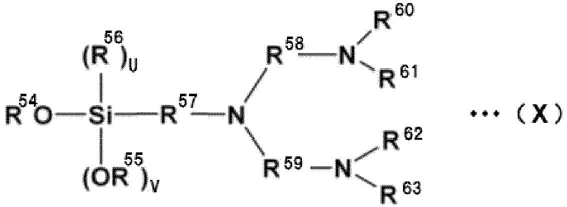

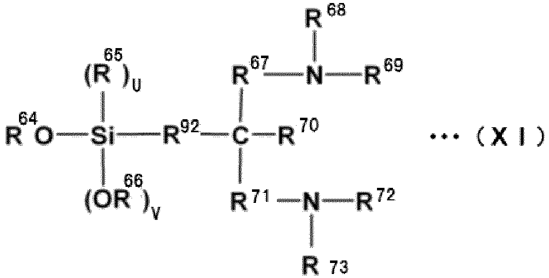

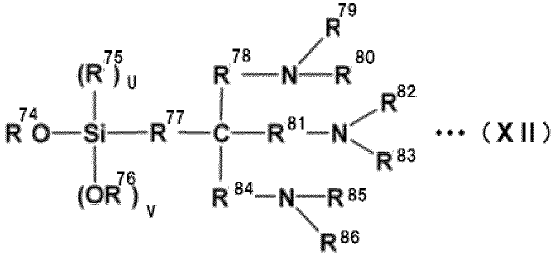

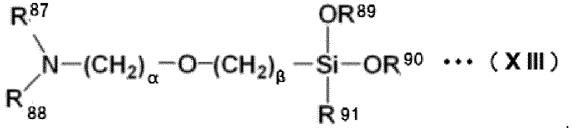

In the general formulae (X) to (XIII), reference symbols U, V each are an integer of 0 to 2 which also satisfy U+V=2. R⁵⁴ to R⁹² in the general formulae (X) to (XIII) may be the same or different from each other, and each are a monovalent or divalent aliphatic or alicyclic hydrocarbon group with 1 to 20 carbon atoms or a monovalent or divalent aromatic hydrocarbon group with 6 to 18 carbon atoms. In the general formula (XIII), α and β each are an integer of 0 to 5.

Preferred as the polymerization initiator having the modified functional group is a lithium amide compound. Examples of the lithium amide compound may include, for example, lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, and lithium methylphenethylamide.

The rubber composition contains a filler (B). The filler (B) is compounded by 40 to 120 parts by mass, and preferably by 50 to 100 parts by mass, with respect to 100 parts by mass of the diene-based polymer (A). The content of the filler (B) in the rubber composition falling within the aforementioned range allows for improving fuel efficiency and wet performance of a tire applied with the rubber composition.

The filler (B) contains 50 to 100 mass%, preferably 70 to 100 mass%, and more preferably 80 to 90 mass% of the silica (B1) having an average primary particle size of 20 nm or more and a nitrogen adsorption specific surface area of 150 m²/g or less. The filler (B) containing 50 mass% or more of the silica (B1) allows for reducing tanδ of the rubber composition at 60°C, and also for reducing elastic modulus in a high distortion region of the rubber composition.

The silica (B1) has an average primary particle size of 20 nm or more, preferably 30 nm or more, and also preferably 40 nm or less.

Further, the silica (B1) has a nitrogen adsorption specific surface area of 150 m²/g or less, which is preferably 120 m²/g or less.

Here, the silica (B1) may further preferably have an average primary particle size of 30 nm or more and a nitrogen adsorption specific surface area of 120 m²/or less, and particularly preferably have an average primary particle size of 30 nm or more and 40 nm or less and a nitrogen adsorption specific surface area of 120 m²/or less.

The silica is not particularly limited, and examples thereof may include, for example, wet silica (hydrated silicic acid), dry silica (silicic anhydride), calcium silicate, and aluminum silicate, with wet silica being preferred. These silica may be used alone or in combinations of two or more.

The filler (B) may further contain carbon black. The filler (B) contains 50 mass% or less, preferably 30 mass% or less, and more preferably 5 to 10 mass% of the carbon black. The carbon black thus compounded allows for improving rigidity of the rubber composition.

The carbon black is not particularly limited, and examples thereof may include carbon blacks of such grades as, for example, GPF, FEF, HAF, ISAF, SAF, with ISAF, SAF being preferred in view of improving tire wet performance. These carbon blacks may be used alone or in combination or two or more.

The filler (B) may also include, in addition to the aforementioned silica and carbon black: aluminum hydroxide; alumina; clay; calcium carbonate; and the like.

The disclosed rubber composition may preferably further contain a silane coupling agent, in order to improve the compounding effect of the silica. The silane coupling agent is not particularly limited, and examples thereof may include, for example, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxy silane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide. These silane coupling agents may be used alone or in combination of two or more.

Further, the silane coupling agent may preferably be compounded in a range of 2 to 20 parts by mass and more preferably in a range of 5 to 15 parts by mass, with respect to 100 parts by mass of the silica. The silane coupling agent compounded by 2 parts by mass or more, with respect to 100 parts by mass of silica, is capable of sufficiently improving the compounding effect of the silica, while the silane coupling agent compounded by 20 parts by mass or less is less likely to result in gelation of the rubber component (A).

The disclosed rubber composition includes at least one kind of resin (C) selected from the group consisting of a C₅ resin, a C₉ resin, a C₅-C₉ resin, and a dicyclopentadiene resin. These resins may be used alone or in combination of two or more. The resin (C) may be compounded with the rubber composition, so as to reduce the elastic modulus in a high distortion region while suppressing reduction in the elastic modulus in a low distortion region. Accordingly, a rubber composition compounded with the resin (C) may be applied to a tread of a tire, so as to ensure rigidity of the tread rubber in a portion that suffers minor distortion during running as being distant from the contact patch with a road surface, while increasing the deformed volume of the tread rubber that suffers significant distortion during running as being in the vicinity of the contact patch with a road surface, with the result that the friction coefficient (µ) on a wet road surface is increased, to thereby improve the wet performance of the tire.

Here, the disclosed rubber composition may further compounded with other resins such as a rosin resin, an alkyl phenol resin, and a terpene phenol resin, in addition to the at least one kind of resin (C) selected from the group consisting of: a C₅ resin, a C₉ resin, a C₅-C₉ resin, and a dicyclopentadiene resin.

The compounding amount of the resin (C) is 5 to 50 parts by mass, preferably 8 to 30 parts by mass, and more preferably 10 to 20 parts by mass, with respect to 100 parts by mass of the diene-based polymer (A). The compounding amount of the resin (C) falling below 5 parts by mass, with respect to 100 parts by mass of the diene-based polymer (A), cannot sufficiently reduce the elastic modulus in a high distortion region of the rubber composition, whereas the compounding amount exceeding 50 parts by mass cannot fully suppress reduction in elastic modulus of the rubber composition in a low distortion region.

The C₅ resin refers to a C₅ synthetic petroleum resin. Examples of such C₅ resin may include, for example, an aliphatic resin obtained by polymerizing, using a Friedel-Crafts type catalyst such as AlCl₃, BF₃, a C₅ fraction resulting from thermal cracking of naphtha in petrochemical industry. The C₅ fraction generally includes: an olefin-based hydrocarbon such as 1-pentene, 2-pentene, 2-methyl-1-butene, 2-methyl-2-butene, 3-methyl-1-butene; and a diolefin-based hydrocarbon such as 2-methyl-1,3-butadiene, 1,2-pentadiene, 1,3-pentadiene, 3-methyl-1,2-butadiene. The C₅ resin is commercially available, and examples thereof include, for example, "ESCOREZ (registered trademark) 1000 series" as an aliphatic petroleum resin manufactured by ExxonMobil Chemical Company, and "A100, B170, M100, R100" etc. from among "Quintone (registered trademark) 100 Series" as an aliphatic petroleum resin manufactured by Zeon Corporation.

The C₉ resin is a resin obtained by polymerizing an aromatic compound with 9 carbon atoms containing, as principal monomers, vinyl toluene, alkyl styrene, indene, which are C₉ fractions by-produced together with petrochemical fundamental raw materials such as ethylene and propylene, through, for example, thermal cracking of naphtha in petrochemical industries. Here, specific examples of C₉ fractions obtained through thermal cracking of naphtha may include: vinyl toluene; α-methylstyrene; β-methylstyrene; γ-methylstyrene; o-methylstyrene; p-methylstyrene; and indene. The C₉ resin may be obtained by using, along with C₉ fractions, styrene or the like as a C₈ fraction, methylindene, 1,3-dimethylstyrene as C₁₀ fractions, and even naphthalene, vinylnaphthalene, vinylanthracene, p-tert-butylstyrene as raw materials, and by copolymerizing these C₈ to C₁₀ fractions as mixtures, through, for example, a Friedel-Crafts type catalyst. The C₉ resin may be a modified petroleum resin modified by a compound having a hydroxyl group or an unsaturated carboxylic compound. The C₉ resin is commercially available, and examples of an unmodified C₉ petroleum resin may be available under the trade names such as "Nisseki Neopolymer (registered trademark) L-90", "Nisseki Neopolymer (registered trademark) 120", "Nisseki Neopolymer (registered trademark) 130", "Nisseki Neopolymer (registered trademark) 140" (manufactured by JX Nippon Oil & Energy Corporation).

The C₅-C₉ resins refer to a C₅-C₉ synthetic petroleum resins. An example of such C₅-C₉ resins may include a solid polymer obtained by, for example, polymerizing petroleum-derived C₅ fraction and C₉ fraction, using a Friedel-Crafts type catalyst such as AlCl₃, BF₃, and more specific examples thereof may include a copolymer or the like containing styrene, vinyltoluene, α-methylstyrene, and indene as principal components. Preferred as the C₅-C₉ resins is a resin containing less components of C₉ or more, in view of the compatibility with the diene-based polymer (A). Here, a resin containing "less components of C₉ or more" refers to a resin containing less than 50 mass%, and preferably 40 mass% or less of components of C₉ or more, with respect to the total amount of the resin. The C₅-C₉ resins are commercially available under the trade names such as "Quintone (registered trademark) G100B" (manufactured by Zeon Corporation), and of "ECR213" (manufactured by ExxonMobil Chemical Company).

The dicyclopentadiene resin is a petroleum resin manufactured using, as a main material, dicyclopentadiene obtained through dimerization of cyclopentadiene. The cyclopentadiene resin is commercially available under the trade names such as "Quintone (registered trademark) 1000 Series", among which "1105, 1325, 1340", as an alicyclic petroleum resin manufactured by Zeon Corporation.

The disclosed rubber composition may further include a softener in view of processability and operability. The softener may preferably be compounded in a range of 1 to 5 parts by mass, and more preferably in a range of 1.5 to 3 parts by mass, with respect to 100 parts by mass of the diene-based polymer (A). The softener compounded by 1 part by mass or more can facilitate kneading of the rubber composition, while the softener compounded by 5 parts by mass or less can suppress reduction in rigidity of the rubber composition.

Here, examples of the softener may include mineral-derived mineral oil, petroleum-derived aromatic oil, paraffin oil, naphthene oil, and naturally-derived palm oil, with mineral-derived softener and petroleum-derived softener being preferred in view of tire wet performance.

The disclosed rubber composition may further include a fatty acid metal salt. Examples of metals for use in the fatty acid metal salt may include Zn, K, Ca, Na, Mg, Co, Ni, Ba, Fe, Al, Cu, Mn, with Zn being preferred. Meanwhile, examples of fatty acid for use in the fatty acid metal salt may include a fatty acid having a saturated or unsaturated straight chain, branched chain, or cyclic structure with 4 to 30 carbon atoms, with a saturated or unsaturated straight chain fatty acid with 10 to 22 carbon atoms being preferred. Examples of the saturated straight chain fatty acid with 10 to 22 carbon atoms may include: lauric acid; myristic acid; palmitic acid; stearic acid; and the like, and examples of the unsaturated straight chain fatty acid with 10 to 22 carbon atoms may include: oleic acid; linoleic acid; linolenic acid; arachidonic acid; and the like. The fatty acid metal salts may be used alone or in combination of two or more. The fatty acid metal salt may preferably be compounded in a range of 0.1 to 10 parts by mass, and more preferably in a range of 0.5 to 5 parts by mass, with respect to 100 parts by mass of the diene-based polymer (A).

The disclosed rubber composition may also include, for example, compounding agents generally used in the rubber industry, such as stearic acid, an age resistor, zinc oxide (zinc white), a vulcanization accelerator, and a vulcanizing agent which may be selected as appropriate without affecting the object of the present disclosure, in addition to the diene-based polymer (A), the filler (B), the silane coupling agent, the resin (C), the softener, and the fatty acid metal salt. These compounding agents may suitably use those commercially available. However, in view of reducing storage modulus of the disclosed rubber composition on dynamic strain of 1% at 0°C, it is preferred not to compound thermosetting resins such as novolak-type and resol-type phenol resin, and resorcinol resin.

The disclosed rubber composition may preferably have tanδ of 0.5 or less at 0°C, a difference of 0.07 or less between tanδ at 30°C and tanδ at 60°C, and a storage modulus of 20 MPa or less on dynamic strain of 1% at 0°C.

The rubber composition with tanδ of 0.5 or less at 0°C is capable of improving fuel efficiency at low temperatures of a tire applied with the rubber composition. Here, tanδ at 0°C is more preferably 0.45 or less, and even more preferably 0.4 or less, in view of the fuel efficiency of the tire at low temperatures. Further, the lower limit of tanδ at 0°C is not particularly limited; however, tanδ at 0°C in general is 0.15 or more.

Further, when the difference between tanδ at 30°C and tanδ at 60°C of the rubber composition is 0.07 or less, tanδ becomes less temperature dependent, which can improve fuel efficiency of a tire applied with the rubber composition, across a wide temperature region. The difference between tanδ at 30°C and tanδ at 60°C is more preferably 0.06 or less, further preferably 0.055 or less, and particularly preferably 0.05 or less, in view of suppressing temperature dependence of the fuel efficiency of the tire. However, the lower limit of the difference between tanδ at 30°C and tanδ at 60°C is not particularly limited, and the difference may be 0.

Further, the rubber composition having the storage modulus (E') of 20 MPa or less on dynamic strain of 1% at 0°C is high in flexibility at low temperatures; thus, the rubber composition may be applied to a tire tread rubber so as to improve contact performance of the tread rubber, to thereby further improve wet performance of the tire. Here, in view of wet performance, the storage modulus (E') on dynamic strain of 1% at 0°C is more preferably 18 MPa or less, and further preferably 16 MPa or less, and preferably 3 MPa or more, more preferably 5 MPa or more, further preferably 8 MPa or more, and still further preferably 9 MPa or more, and particularly preferably 10 MPa or more.

Further, the disclosed rubber composition may preferably have tanδ at 30°C of 0.4 or less, more preferably 0.35 or less, and generally 0.1 or more. Further, the disclosed rubber composition may preferably have tanδ at 60°C of 0.35 or less, more preferably 0.3 or less, and generally 0.05 or more. In this case, the tire fuel efficiency can be improved across a wide temperature range.

In the disclosed rubber composition, the difference between tanδ at 0°C and tanδ at 30°C is preferably 0.30 or less, more preferably 0.14 to 0.30, further preferably 0.15 to 0.25, and particularly preferably 0.16 to 0.20, in view of improving wet performance and reducing temperature dependence of fuel efficiency.

Further, in the disclosed rubber composition, the difference between tanδ at 0°C and tanδ at 60°C is preferably 0.35 or less, more preferably 0.24 or less, and further preferably 0.23 or less, or the difference may be 0, in view of reducing temperature dependence of fuel efficiency.

The disclosed rubber composition preferably has a tensile strength (Tb) of 20 MPa or more, and more preferably 23 MPa or more, in view of wet performance. A rubber composition having a tensile strength of 20 MPa or more may be used for a tread rubber, so as to improve rigidity of the tread rubber as a whole, to thereby further improve wet performance.

The disclosed rubber composition suitably configured as described above, in which tanδ at 0°C is 0.5 or less and the difference between tanδ at 30°C and tanδ at 60°C is 0.07 or less, is preferably produced through the step of kneading the diene-based polymer (A), the filler (B), and the resin (C) at 150 to 165°C, excluding the vulcanization compounding agents including the vulcanizing agent and the vulcanization accelerator.

The kneading of the aforementioned components at 150 to 165°C, excluding the vulcanization compounding agent, can have the compounding agents, other than the vulcanization compounding agents, uniformly dispersed into the diene-based polymer (A) while avoiding premature vulcanization (scorch), so that the compounding effect of the compounding agents can be full exerted, which makes small the difference between tanδ at 30°C and tanδ at 60°C while reducing tanδ of the rubber composition at 0°C.

Here, the rubber composition may be varied in tanδ, the difference between tanδ at respective temperatures, the storage modulus (E'), and the tensile strength (Tb) by adjusting, not only the aforementioned kneading temperature, but also the types and the compounding ratio of the diene-based polymer (A), the ratio of silica in the filler (B) and the types of silica, the types and the compounding amount of the resin (C), and further the types and amounts of other compounding agents.

Further, the rubber composition, which has been kneaded at 150 to 165°C, may preferably be further kneaded at another temperature of less than 150°C with the addition of vulcanization compounding agents. Here, the rubber composition, in which the compounding agents other than the vulcanization compounding agent have been uniformly dispersed in the diene-based polymer (A) and thereafter compounded with vulcanization compounding agents including a vulcanizing agent and a vulcanization accelerator, may preferably be kneaded at a temperature capable of preventing premature vulcanization (scorch), for example, at 90°C to 120°C.

In the manufacture of the rubber composition, the kneading time for the kneading at each temperature is not particularly limited, and may be set as appropriate in consideration of the size of the kneader, the volume of the raw material, and the types and condition of the raw material.

Examples of the vulcanizing agent may include sulfur and the like. The vulcanizing agent may be compounded, in terms of sulfur content, in a range of 0.1 to 10 parts by mass, and more preferably in a range of 1 to 4 parts by mass, with respect to 100 parts by mass of the diene-based polymer (A). The compounding amount of the vulcanizing agent, which may be 0.1 parts by mass or more in terms of sulfur content, is capable of ensuring the rupture strength and wear resistance of the vulcanized rubber, while the compounding amount of 10 parts by mass or less is capable of sufficiently ensuring rubber elasticity. In particular, the compounding amount of the vulcanizing agent, which is 4 parts by mass or less in terms of sulfur, is capable of further improving wet performance of the tire.

The vulcanization accelerator is not particularly limited, and examples thereof may include, for example, a thiazole-based vulcanization accelerator such as 2-mercaptobenzothiazole (M), dibenzothiazyl disulfide (DM), N-cyclohexyl-2-benzothiazylsulfenamide (CZ), N-tert-butyl-2-benzothiazolylsulfenamide (NS), and a guanidine-based vulcanization accelerator such as 1,3-diphenylguanidine (DPG). Here, the disclosed rubber composition may preferably include three different vulcanization accelerators. The vulcanization accelerator may preferably be compounded in a range of 0.1 to 5 parts by mass, and more preferably be in a range of 0.2 to 3 parts by mass, with respect to 100 parts by mass of the diene-based polymer (A).

The disclosed rubber composition is obtained by compounding, into the diene-based polymer (A), the filler (B) and the resin (C) and various compounding agents selected as needed, and by kneading the same as described above by using, for example, a Banbury mixer or a roll, and thereafter by subjecting it to warming, extrusion or the like.

The rubber composition can be used in various rubber products including tires. In particular, the disclosed rubber composition is suited for use in a tread rubber.

### <Tire>

The disclosed tire has a feature of using the aforementioned rubber composition as a tread rubber. The disclosed tire uses the aforementioned rubber composition in a tread rubber, and thus, is excellent in fuel efficiency and wet performance. The disclosed tire can be used as a tire for various vehicles, but is preferred as a general tire for passenger vehicles.

The disclosed tire may be obtained using, depending on the types of the tire to be applied, an unvulcanized rubber composition, and may be vulcanized after being formed. Alternatively, the disclosed tire may be obtained using a semi-vulcanized rubber through such process as pre-vulcanization process which is shaped and further vulcanized. The disclosed tire is preferably a pneumatic tire, and a gas to be filled into the pneumatic tire may use an inert gas such as nitrogen, argon, and helium, in addition to general air or air adjusted in terms of oxygen partial pressure.

### EXAMPLES

In below, the present disclosure is described in detail with reference to predicted Examples; however, the present disclosure is not limited at all to the following predicted Examples.

### <Preparation and Evaluation of Rubber Composition>

Rubber compositions were manufactured according to the formulations of Tables 1 to 2 using a general Banbury mixer. Compounded into the rubber compositions in addition to the compounding agents of Tables 1 to 2, were: 3 parts by mass of petroleum-based oil [manufactured by Japan Energy Corporation, trade name "Process X-140"], 1 part by mass of age resistor [N-(1,3-dimethylbutyl)-N'-phenyl-p-phenylenediamine, manufactured by Ouchi Shinko Chemical Industrial Co., Ltd, trade name "Nocrac 6C"], 1 part by mass of stearic acid, 2.5 parts by mass of zinc white; 0.8 parts by mass of a vulcanization accelerator A [1,3-diphenylguanidine, manufactured by Sumitomo Chemical Company Limited, trade name "SOXINOL (registered trademark) D-G"], 1.1 parts by mass of a vulcanization accelerator B [dibenzothiazyl disulfide, Ouchi Shinko Chemical Industrial Co., Ltd., trade name "Nocceler (registered trademark) DM-P"], 1 part by mass of a vulcanization accelerator C [N-cyclohexyl-2-benzothiazylsulfenamide, Ouchi Shinko Chemical Industrial Co., Ltd., trade name "Nocceler (registered trademark) CZ-G"], and 1.9 parts by mass of sulfur.

The rubber compositions thus obtained were measured by the following methods for the loss tangent (tanδ), the storage modulus (E'), and the tensile strength (Tb), and further, evaluated for wet performance and fuel efficiency. The results are provided in Tables 1 to 2.

### (1) Loss Tangent (tanδ) and Storage Modulus (E')

The rubber composition was vulcanized for 33 minutes at 145°C to be obtained as a vulcanized rubber, which was measured for tanδ (loss tangent) at 0°C, 30°C, 60°C, and the storage modulus (E') at 0°C, using a spectrometer manufactured by Ueshima Seisakusho Co., Ltd, under the condition of the initial load: 160 mg, the dynamic strain: 1%, and the frequency: 52 Hz.

### (2) Tensile Strength (Tb)

The rubber composition was vulcanized for 33 minutes at 145°C to be obtained as a vulcanized rubber, which was measured for the tensile strength (Tb) in accordance with JIS K6251-1993.

### (3) Wet Performance

Using the rubber composition obtained as described above as a tread rubber, a passenger vehicle pneumatic radial tire of size 195/65R15 was fabricated. The test tire thus fabricated was mounted onto a test vehicle, so as to evaluate the grip performance by feeling ratings of the driver in an actual vehicle test on a wet road surface. The results are indexed with the feeling rating 100 for the tire of Comparative Example 2. Larger index values indicate more excellent wet performance.

### (4) Fuel Efficiency

Calculated was the inverse of tanδ at 60°C measured as described above for each of the vulcanized rubbers, and each inverse was indexed with the inverse 100 of tanδ of Comparative Example 2. Larger index values indicate smaller tanδ at 60°C, meaning that the fuel efficiency is excellent.

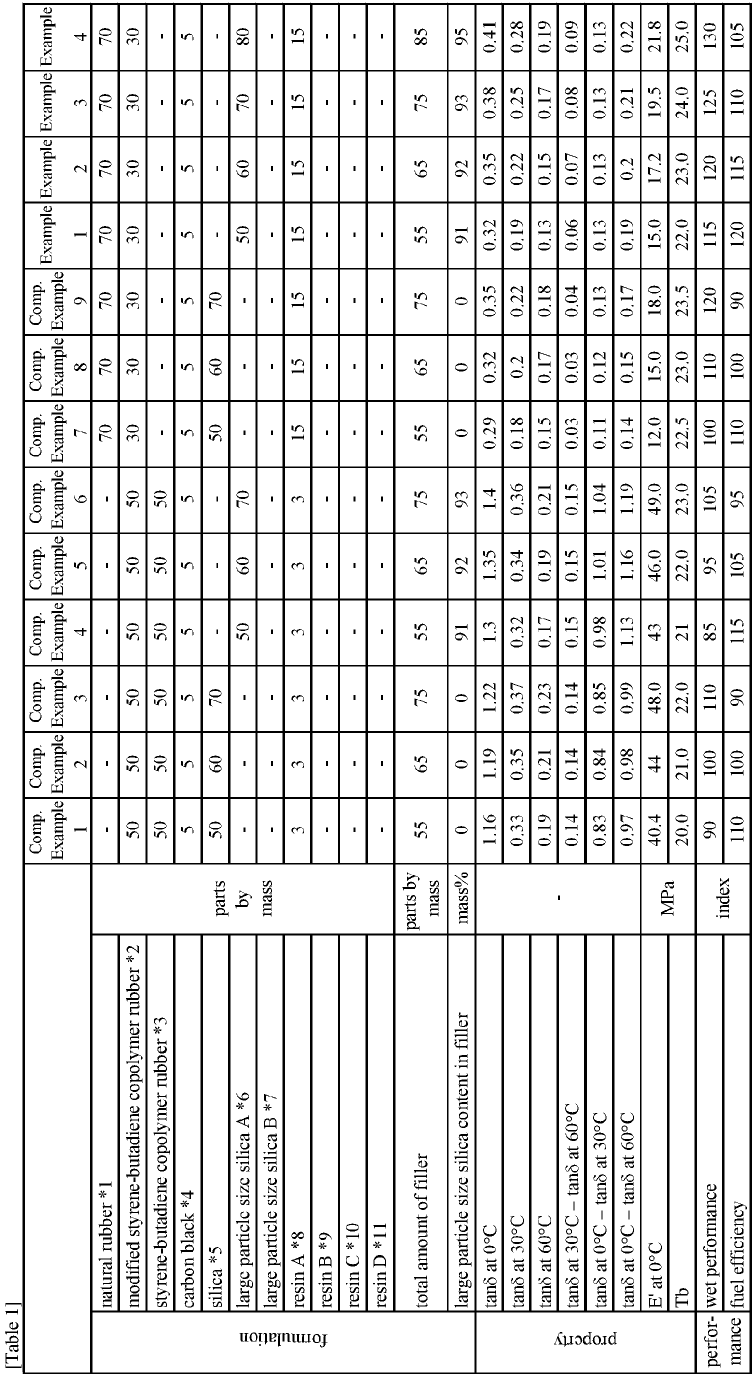

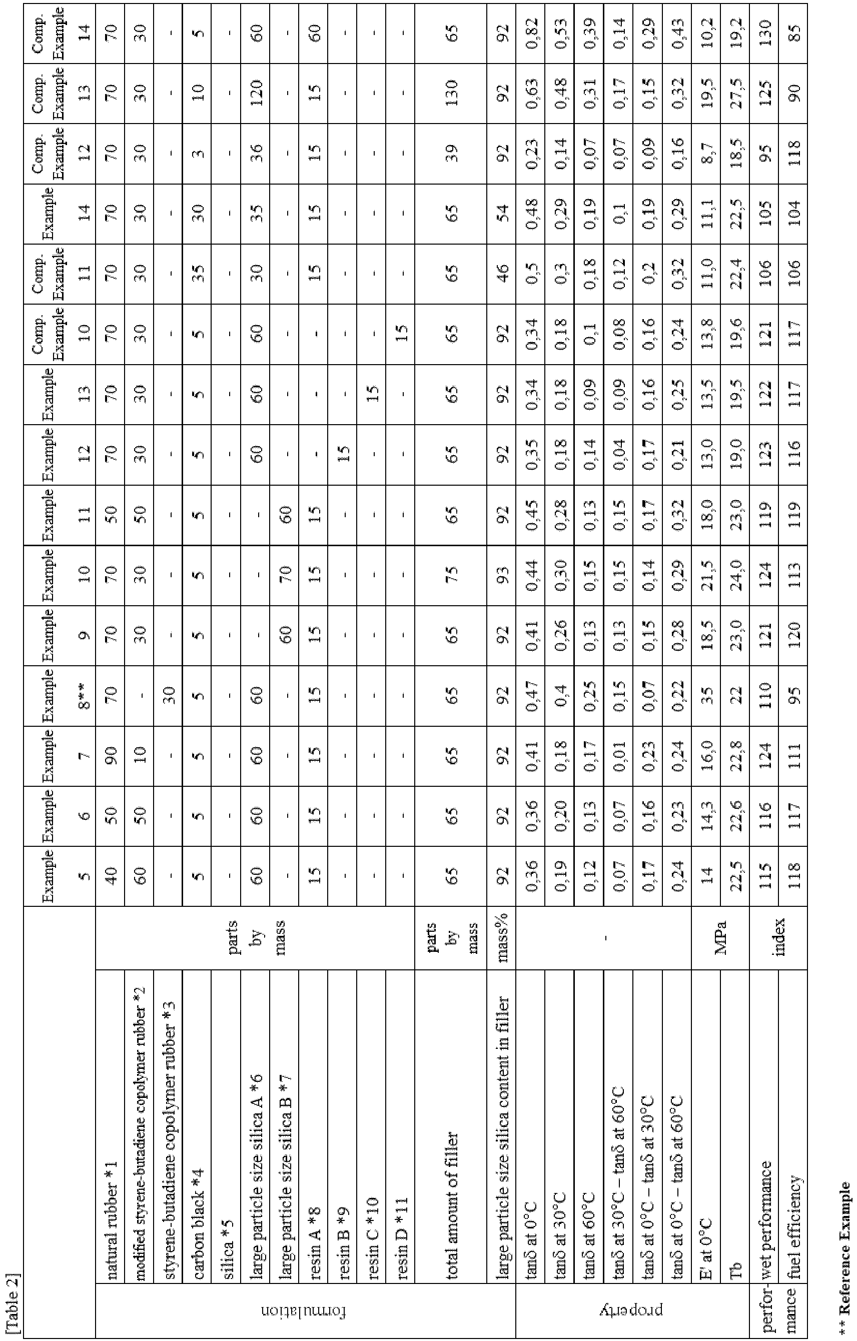

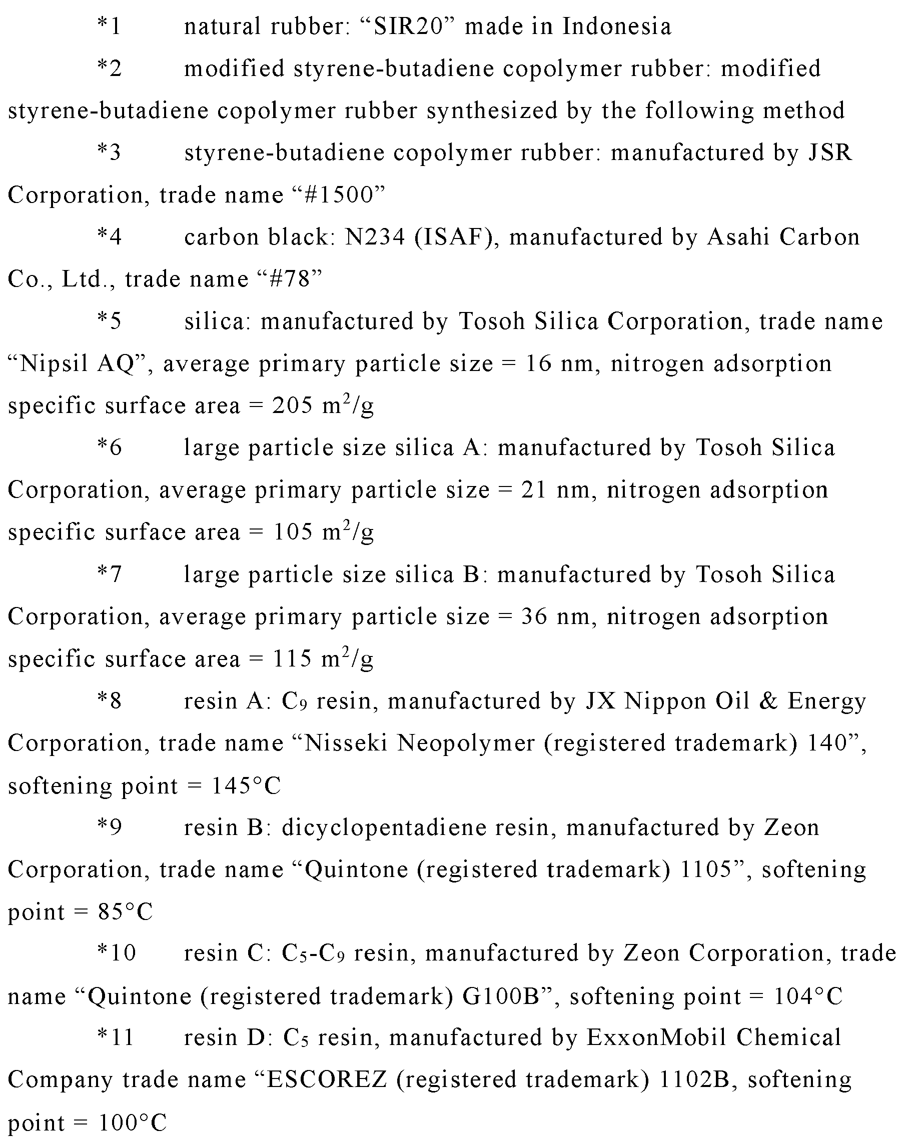

### <Synthesis of Modified Styrene-Butadiene Copolymer Rubber>

A cyclohexane solution of 1,3-butadiene and a cyclohexane solution of styrene were added into a dried, nitrogen-substituted heat-resistant glass container of 800 mL such that 1,3-butadiene of 67.5 g and styrene of 7.5 g was contained, to which 0.6 mmol of 2,2-ditetrahydrofurylpropane was added and 0.8 mmol of n-butyllithium was added, which was thereafter polymerized at 50°C for 1.5 hours. To a polymerization reaction system which attained substantially 100% of polymerization conversion rate, 0.72 mmol of N,N-bis(trimethylsilyl)-3-[diethoxy(methyl)silyl]propylamine [corresponding to the compound of the general formula (IV)] was added as a modifier, which was subjected to modification reaction at 50°C for 30 minutes. Thereafter, 2 mL of an isopropanol solution containing 5 mass% of 2,6-di-t-butyl-p-cresol (BHT) was added thereto to cease the reaction, and the reactant was dried according to a conventional method, to thereby obtain a modified styrene-butadiene copolymer rubber.

As can be found from Tables 1 to 2, the disclosed rubber composition may be applied to a tire to improve the tire fuel efficiency and wet performance.

### INDUSTRIAL APPLICABILITY

The disclosed rubber composition can be used as a tread rubber of a tire. The disclosed tire can be used as tires for various vehicles, and preferred as a general tire for passenger vehicles.

## Claims

1. A rubber composition comprising: a diene-based polymer (A); a filler (B); and at least one kind of resin (C) selected from the group consisting of a C₅ resin, a C₉ resin, a C₅-C₉ resin, and a dicyclopentadiene resin,
wherein:
the diene-based polymer (A) contains 40 mass% or more of natural rubber,
the diene-based polymer (A) further contains a modified polymer;
the filler (B) is compounded by 40 to 120 parts by mass with respect to 100 parts by mass of the diene-based polymer (A);
the filler (B) contains 50 to 100 mass% of silica having an average primary particle size of 20 nm or more and a nitrogen adsorption specific surface area of 150 m²/g or less obtained by a BET method in accordance with JIS K 6430:2008; and
the resin (C) is compounded by 5 to 50 parts by mass with respect to 100 parts by mass of the diene-based polymer (A).

2. The rubber composition according to claim 1, wherein:
tanδ at 0°C is 0.5 or less; and
a difference between tanδ at 30°C and tanδ at 60°C is 0.07 or less.

3. The rubber composition according to claim 1 or 2, having a storage modulus of 20 MPa or less on dynamic strain of 1% at 0°C.

4. The rubber composition according to any one of claims 1 to 3, wherein a difference between tanδ at 0°C and tanδ at 30°C is 0.30 or less.

5. The rubber composition according to any one of claims 1 to 4, wherein a difference between tanδ at 0°C and tanδ at 60°C is 0.35 or less.

6. A tire using the rubber composition according to any one of claims 1 to 5 as a tread rubber.

## Patentansprüche

1. Kautschukzusammensetzung, umfassend: ein dienbasiertes Polymer (A); einen Füllstoff (B); und mindestens eine Art von Harz (C), ausgewählt aus der Gruppe bestehend aus einem C₅-Harz, einem C₉-Harz, einem C₅-C₉-Harz und einem Dicyclopentadienharz,
wobei:
das dienbasierte Polymer (A) zu 40 Massen-% oder mehr Naturkautschuk enthält,
das dienbasierte Polymer (A) ferner ein modifiziertes Polymer enthält;
der Füllstoff (B) aus 40 bis 120 Massenteilen, bezogen auf 100 Massenteile des dienbasierten Polymers (A), compoundiert ist;
der Füllstoff (B) zu 50 bis 100 Massen-% Siliciumdioxid mit einer durchschnittlichen Primärpartikelgröße von 20 nm oder mehr und einer spezifischen Stickstoffadsorptionsoberfläche von 150 m²/g oder weniger, erhalten durch ein BET-Verfahren gemäß JIS K 6430:2008, enthält; und
das Harz (C) aus 5 bis 50 Massenteilen, bezogen auf 100 Massenteile des dienbasierten Polymers (A), compoundiert ist.

2. Kautschukzusammensetzung nach Anspruch 1, wobei:
tanδ bei 0 °C 0,5 oder weniger beträgt; und
eine Differenz zwischen tanδ bei 30 °C und tanδ bei 60 °C 0,07 oder weniger beträgt.

3. Kautschukzusammensetzung nach Anspruch 1 oder 2 mit einem Speichermodul von 20 MPa oder weniger bei einer dynamischen Dehnung von 1 % bei 0 °C.

4. Kautschukzusammensetzung nach einem der Ansprüche 1 bis 3, wobei eine Differenz zwischen tanδ bei 0 °C und tanδ bei 30 °C 0,30 oder weniger beträgt.

5. Kautschukzusammensetzung nach einem der Ansprüche 1 bis 4, wobei eine Differenz zwischen tanδ bei 0 °C und tanδ bei 60 °C 0,35 oder weniger beträgt.

6. Reifen, bei dem die Kautschukzusammensetzung nach einem der Ansprüche 1 bis 5 als Laufflächenkautschuk verwendet wird.

## Revendications

1. Composition de caoutchouc comprenant : un polymère à base de diène (A) ; une charge (B) ; et au moins un type de résine (C) choisi dans le groupe constitué d'une résine en C₅, une résine en C₉, une résine en C₅ à C₉, et une résine dicyclopentadiénique,
dans laquelle :
le polymère à base de diène (A) contient 40 % en masse ou plus de caoutchouc naturel,
le polymère à base de diène (A) contient en outre un polymère modifié ;
la charge (B) est mélangée à raison de 40 à 120 parties en masse par rapport à 100 parties en masse du polymère à base de diène (A) ;
la charge (B) contient 50 à 100 % en masse de silice ayant une taille moyenne de particules primaires de 20 nm ou plus et une superficie spécifique d'adsorption d'azote de 150 m²/g ou moins obtenue par un procédé BET conformément à JIS K 6430:2008 ; et
la résine (C) est mélangée à raison de 5 à 50 parties en masse par rapport à 100 parties en masse du polymère à base de diène (A).

2. Composition de caoutchouc selon la revendication 1, dans laquelle :
tanδ à 0 °C vaut 0,5 ou moins ; et
une différence entre tanδ à 30 °C et tanδ à 60 °C vaut 0,07 ou moins.

3. Composition de caoutchouc selon la revendication 1 ou 2, ayant un module de conservation de 20 MPa ou moins sur une déformation dynamique de 1 % à 0 °C.

4. Composition de caoutchouc selon l'une quelconque des revendications 1 à 3, dans laquelle une différence entre tanδ à 0 °C et tanδ à 30 °C vaut 0,30 ou moins.

5. Composition de caoutchouc selon l'une quelconque des revendications 1 à 4, dans laquelle une différence entre tanδ à 0 °C et tanδ à 60 °C vaut 0,35 ou moins.

6. Pneu utilisant la composition de caoutchouc selon l'une quelconque des revendications 1 à 5 en tant que caoutchouc de bande de roulement.
